Europäisches Patentamt

European Patent Office

Office européen des brevets

(11) Numéro de publication: **0 356 361 B1**

(12) **FASCICULE DE BREVET EUROPEEN**

(45) Date de publication de fascicule du brevet: **27.10.93**

(51) Int. Cl.5: **B30B 11/02**, H05B 3/46, G21C 17/00, C04B 35/58

(21) Numéro de dépôt: **89440080.3**

(22) Date de dépôt: **24.07.89**

(54) Procédé de fabrication d'un barreau isolant en nitrure de bore principalement utilisé dans des éléments chauffants protégés, et barreau ainsi obtenu.

(30) Priorité: **25.07.88 FR 8810171**

(43) Date de publication de la demande: **28.02.90 Bulletin 90/09**

(45) Mention de la délivrance du brevet: **27.10.93 Bulletin 93/43**

(84) Etats contractants désignés: **AT BE CH DE ES GB GR IT LI LU NL SE**

(56) Documents cités:
CH-A- 138 266   CH-A- 201 106
CH-A- 321 026   CH-A- 486 317
CH-A- 518 125   DE-A- 3 430 336
DE-C- 321 659   FR-A- 1 526 880
FR-A- 2 104 188   FR-A- 2 313 836
FR-A- 2 443 182   US-A- 1 432 434
US-A- 3 839 623

(73) Titulaire: **FINANCIERE CETAL, S.A.R.L.**
**42, rue des Aviateurs**
**F-67500 Haguenau(FR)**

(72) Inventeur: **Pfirsch, Pierre**
**20, rue Gaillardin**
**F-67500 Haguenau(FR)**

(74) Mandataire: **Nuss, Pierre et al**
**10, rue Jacques Kablé**
**F-67080 Strasbourg Cédex (FR)**

EP 0 356 361 B1

Rank Xerox (UK) Business Services
(3.10/3.6/3.3.1)

## Description

La présente invention a pour objet un procédé de fabrication d'un barreau isolant en nitrure de bore principalement utilisé dans des éléments chauffants protégés, un barreau ainsi obtenu, un procédé de fabrication d'un élément chauffant protégé principalement constitué par une enveloppe, telle qu'un tube métallique assurant la protection mécanique, électrique et chimique de l'élément chauffant, à l'intérieur de laquelle se trouve au moins une résistance noyée dans un isolant sous la forme de plusieurs barreaux en nitrure de bore, et un élément chauffant ainsi obtenu.

Ces éléments chauffants sont essentiellement utilisés pour le chauffage de liquides (eau, huile organique, sel, etc...), de gaz ou de corps solides. D'une manière plus générale, ils sont utilisés dans tous les équipements où l'énergie calorifique est fournie par effet Joule.

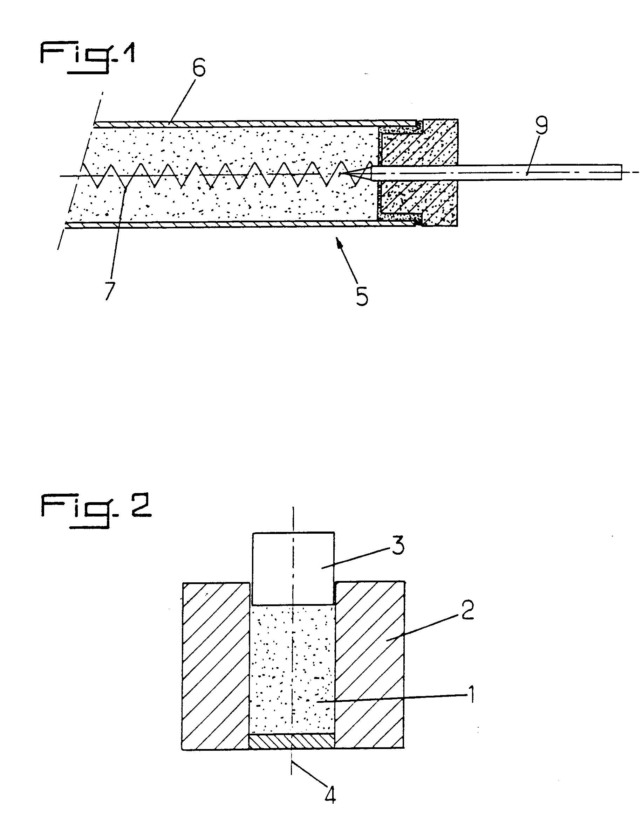

Actuellement, et comme représenté sur la figure 1 des dessins annexés, les éléments chauffants sont principalement constitués par une enveloppe, telle qu'un tube métallique, à l'intérieur de laquelle se trouve au moins une résistance (par exemple, en NiCr 80/20) noyée dans un isolant. Les résistances sont reliées à une amenée de courant qui est maintenue, par exemple, par une perle céramique assurant le respect des lignes de fuite. Entre l'isolant et cette perle céramique est disposé un composant assurant l'étanchéité, tel que, par exemple, du silicone.

Il existe différents types d'éléments chauffants où l'isolant formant le support de la résistance assure une résistance électrique satisfaisante à toutes les températures d'emploi. Ces isolants sont, en général, en amiante, en mica, en porcelaine, en ciment, en magnésie, ou encore en nitrure de bore. La qualité des éléments chauffants est en fait déterminée par les caractéristiques de l'isolant. Ce dernier doit, principalement, assurer un isolement électrique à toutes les températures d'emploi, mais tout en assurant également la transmission de la chaleur depuis la résistance jusqu'à l'enveloppe.

Or, la plupart des matières formant un bon isolement électrique, c'est-à-dire mauvaises conductrices d'électricité, sont également mauvaises conductrices de chaleur. Il est donc nécessaire de trouver un compromis tout en évitant une distance trop importante entre la résistance électrique et l'enveloppe, car ceci entraînerait une élévation de température préjudiciable à la tenue mécanique de la résistance électrique (température de fusion).

Certes, la fabrication de barreaux en magnésie ou en nitrure de bore a permis d'améliorer les flux transmis. Ces barreaux en nitrure de bore sont fabriqués actuellement à partir d'un pressage à froid continu jusqu'à une pression avoisinant 2500 kg/cm² ou encore par adjonction d'un élément de liaison tel que de l'oxyde de bore, ou autre. Une telle fabrication est montrée dans

FR-A-2 104 188 Mais, la fabrication de barreaux en magnésie ou en nitrure de bore présente la difficulté d'obtenir une compression correcte. En effet, une telle compression correcte est obtenue soit par bourrage et laminage dans le cas de la magnésie, soit par pressage et laminage dans le cas du nitrure de bore, soit encore par adjonction d'éléments d'addition au nitrure de bore.

Or, le bourrage et le laminage de la magnésie pure présentent l'inconvénient que les éléments chauffants ainsi obtenus, compte tenu de l'épaisseur importante de la magnésie nécessaire (la magnésie est un mauvais isolant à chaud), présente un gradient de température élevé entre la résistance et l'enveloppe, ce qui peut conduire à la fusion du fil de la résistance. De plus, la conductibilité de la magnésie est faible, la puissance dissipée au travers de la magnésie étant, de ce fait, limitée (pas plus de 50 W/cm²).

Quand aux pressage et laminage du nitrure de bore, l'inconvénient réside dans le fait qu'au delà d'une pression voisine de 4500 kg/cm², un regonflement secondaire apparaît, ce qui rend le barreau friable et entraîne des clivages en feuilles suivant la direction perpendiculaire à l'axe du barreau. La densité obtenue par pressage continu ou par adjonction d'un liant permet, certes, un transfert de flux thermiques plus élevés (supérieur à 50 W/cm²) mais reste nettement insuffisante pour assurer une rigidité diélectrique à froid et à chaud, en contrôlant les gradients de température, en raison des tensions de contournement des grains du nitrure de bore.

Enfin, l'adjonction d'éléments d'addition au nitrure de bore sous forme de liants (par exemple oxyde de bore) permet, certes, d'éviter la phase de pressage, mais minore les propriétés physiques, thermiques et électriques du nitrure de bore.

Le problème posé par l'objet de la présente invention consiste donc à concevoir un procédé de fabrication de barreaux isolants en nitrure de bore permettant l'obtention de barreaux de très forte densité, supérieure à 98 % de la densité théorique, et dont les isolements et les rigidités diélectriques, tant à froid qu'à chaud, sont très élevés (par exemple rigidité diélectrique supérieure à 5000 V).

De tels barreaux isolants devront permettre la fabrication d'éléments chauffants protégés, d'une part, à haute température, dépassant en utilisation 1000°C, d'autre part, à haute tension, pouvant être alimentés à des tensions supérieures à 1000 V, et, enfin, à diffusivité variable.

En effet, en ce qui concerne les éléments chauffants actuels à haute température, adaptables au chauffage industriel pour fours à traitements thermiques, à bains de sels, aux réchauffeurs d'air, et plus généralement à toute application faisant intervenir l'apport de calories à haute température ceux-ci ne dépassent pas actuellement en utilisation une température de 1000°C. Cette limite est liée aux caractéristiques physiques (isolement, conductibilité thermique à haute température, compacité, réaction chimique). Des températures d'utilisation supérieures à 1000°C ont, certes, déjà pu être obtenues, mais uniquement avec des éléments chauffants en céramique non protégés (carbure de silicium, zircone, chromite de lanthane, ...). Mais il va de soi que l'utilisation d'éléments chauffants non protégés a pour inconvénient principal de présenter, d'une part, une tension de vapeur élevée, conduisant inévitablement à une pollution du milieu et de l'atmosphère chauffés et, d'autre part, un vieillissement précoce ; de plus, l'élément se retrouve non isolé par rapport à la masse. Enfin, la nature non métallique du matériau constituant l'élément chauffant nécessite des systèmes d'alimentation complexes.

En ce qui concerne les éléments chauffants actuels à haute tension, tels que des cartouches chauffantes, éléments blindés, aiguilles chauffantes pour le chauffage de fluides liquides ou gazeux, solides ou émetteurs infra-rouges, ils ne peuvent être alimentés à des tensions supérieures à 1000 V. En effet, l'utilisation de la magnésie et du nitrure de bore nécessite une épaisseur de l'isolant importante (1 mm pour 100°C par 1000 V pour la magnésie), afin d'assurer une rigidité électrique suffisante pour respecter les normes de sécurité existantes. Cette épaisseur d'isolant entraîne une augmentation du gradient de température entre la résistance et l'enveloppe de protection, conduisant ainsi à la destruction par fusion de la résistance. Actuellement donc, le procédé de fabrication de tels isolants par bourrage et laminage ne permet pas de concilier le transfert thermique et la rigidité diélectrique à chaud pour des températures supérieures à 200°C et pour des tensions d'alimentation supérieures à 1000 V.

Enfin, en ce qui concerne les éléments chauffants actuels, à diffusivité variable, tels que simulateurs de combustibles pour l'énergie nucléaire, ils présentent l'inconvénient majeur d'accumuler l'énergie thermique, leur chaleur spécifique présentant une valeur finie Ceci entraîne, en cas de coupure à la fois du courant d'alimentation et du circuit de refroidissement, une élévation de température qui finit par provoquer la décomposition partielle du produit réchauffé (par exemple un fluide thermique). Dans le cas de simulateurs de combustibles, il est difficile de fabriquer des éléments chauffants présentant des caractéristiques de diffusivité semblables à celles des barreaux de combustibles nucléaires.

La présente invention a donc également pour but de pallier les inconvénients présentés par ces différents types d'éléments chauffants existants.

Elle a, en effet, pour objet un procédé de fabrication d'un barreau isolant en nitrure de bore, principalement utilisé dans des éléments chauffants protégés, caractérisé en ce qu'il consiste essentiellement à effectuer, en premier lieu, un multipressage vertical du nitrure de bore sous forme de poudre, au moins une phase de relachement de la pression étant prévue entre l'un des pressages, puis à procéder à une déshydratation sous un vide primaire du barreau obtenu après les différents pressages, et enfin à opérer le conditionnement du barreau déshydraté en le disposant dans une atmosphère de gaz neutre à faible taux d'ionisation, la succession de ces différentes étapes permettant l'obtention d'un barreau d'une densité supérieure ou égale à 98 % de la densité théorique, et dont les isolements et les rigidités diélectriques tant à froid qu'à chaud sont très élevés.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

la figure 1 est une vue de face et en coupe d'un élément chauffant appartenant à l'art antérieur ;

la figure 2 est une vue de face et en coupe du poinçon et de la matrice d'une presse lors d'un pressage vertical, conformément au procédé de fabrication d'un barreau isolant selon à l'invention ;

la figure 3 est une vue de face et en coupe d'un élément chauffant à haute tension conforme à l'invention ;

la figure 4 est une vue de droite et en coupe selon la ligne A-A de la figure 3, et

la figure 5 est une vue partielle de face et en coupe du montage des amenées de courant sur un élément chauffant à haute tension conforme à l'invention.

Conformément à l'invention, le procédé de fabrication du barreau 1 isolant en nitrure de bore est caractérisé en ce qu'il consiste essentiellement à effectuer en premier lieu un multipressage vertical du nitrure de bore sous forme de poudre, au moins une phase de relachement de là pression étant prévue entre l'un des pressages, puis à procéder à une déshydratation sous un vide primaire du barreau 1 obtenu après les différents pressages, et enfin à opérer le conditionnement du barreau 1 déshydraté en le disposant dans une atmosphère de gaz neutre à faible taux d'ionisation, la succession de ces différentes étapes permettant l'obtention d'un barreau 1 d'une densité supérieure ou égale à 98 % de la densité théorique, et dont les isolements et les rigidités diélectriques tant à froid qu'à chaud sont très élevés.

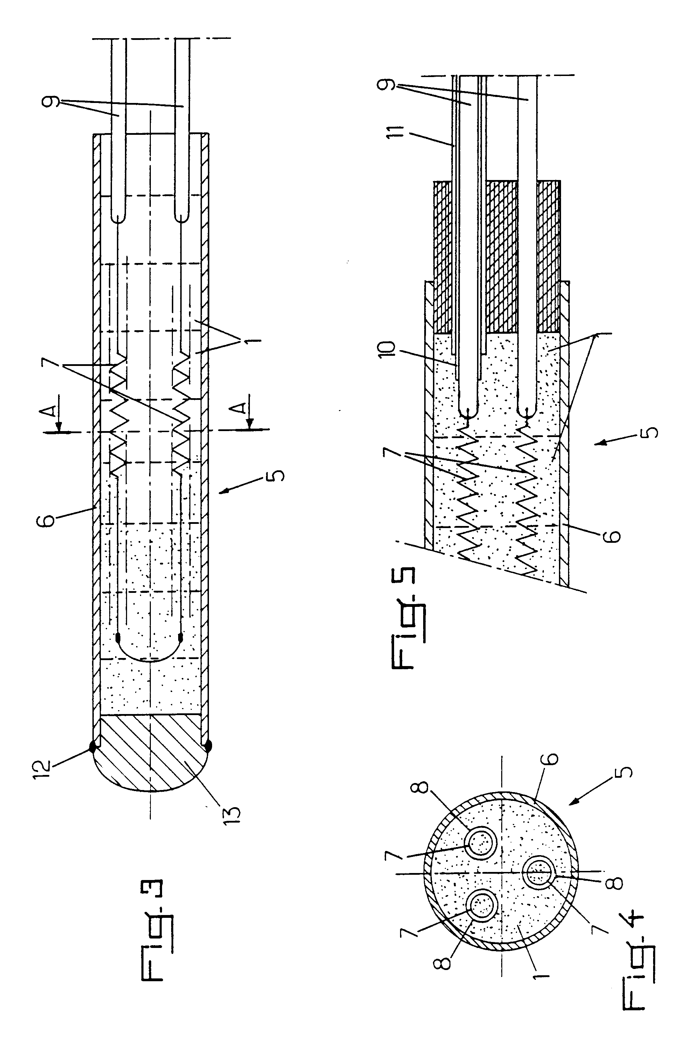

Selon une première variante de réalisation du procédé de fabrication, et comme représenté à la figure 2 des dessins annexés, le multipressage vertical du nitrure de bore sous forme de poudre consiste à effectuer les opérations suivantes :

- remplissage dans la matrice 2 d'une presse d'un volume de 62 mm de hauteur et 15,1 mm de diamètre avec 2,5 à 3 g de nitrure de bore ;
- premier pressage vertical par actionnement du poinçon 3 de la presse dans la matrice 2 jusqu'à une pression de 2500 kg/cm², le temps de descente du poinçon 3 étant de l'ordre de 3 à 4 s ;
- suspension du mouvement de descente du poinçon 3 et maintien de la pression à 2500 kg/cm² pendant une seconde ;
- remontée du poinçon 3 entraînant la libération de la pression ;
- extraction par le bas de la masse de nitrure de bore obtenue, permettant ainsi un relâchement immédiat durant 15 s ;
- réintroduction de cette masse dans la matrice 2 qui est recentrée par rapport à l'axe de pression 4 ;
- second pressage vertical par actionnement du poinçon 3 de la presse dans la matrice 2 jusqu'à une pression de 13000 kg/cm² ;
- suspension du mouvement de descente du poinçon 3 et maintien de la pression à 13000 kg/cm² pendant 2 s ;
- remontée du poinçon 3 entraînant la libération de la pression ;
- extraction par le bas du barreau 1 homogène.

Ce barreau 1 ainsi obtenu, d'une hauteur de 8 mm et d'un diamètre de 15,1 mm, présente une densité supérieure ou égale à 98 % de la densité théorique et des isolements et des rigidités diélectriques tant à froid qu'à chaud très élevés.

Selon une seconde variante de réalisation de l'invention, lors de l'opération de réintroduction de la masse de nitrure de bore dans la matrice 2 pour le second pressage vertical, on l'oriente de 90° par rapport à sa position lors du premier pressage, ce afin d'orienter différemment les forces de pression et d'obtenir ainsi une homogénéité évitant tout clivage et fissuration.

Ces deux premières variantes consistent donc à fabriquer le barreau 1 par voie sèche. Mais il est également possible de les réaliser par voie humide, la seule modification consistant en ce que, préalablement à l'opération de réintroduction dans la matrice 2 de la masse de nitrure de bore pour le second pressage vertical, on l'imbibe d'alcool, qui sert de liant, en la déposant sur un feutre préalablement imbibé.

Selon une troisième variante de réalisation de l'invention, et comme représenté à la figure 2 des dessins annexés, lors de l'opération de multipressage vertical du nitrure de bore sous forme de poudre, on effectue les opérations suivantes :

- remplissage dans la matrice 2 d'une presse d'un volume de 62 mm de hauteur et 15,1 mm de diamètre avec 2,5 à 3 g de poudre de nitrure de bore ;
- premier pressage vertical par actionnement du poinçon 3 de la presse dans la matrice 2 jusqu'à une pression de 2000 kg/cm², le temps de descente du poinçon 3 étant de l'ordre de 3 à 4 s ;
- suspension du mouvement de descente du poinçon 3 et maintien de la pression à 2000 kg/cm² pendant 2 s ;
- augmentation de la pression par pressage vertical jusqu'à une pression de 4500 kg/cm², sous des vibrations d'une fréquence de 4 à 5 Hz, et maintien de la pression pendant 3 s ;
- arrêt des vibrations et remontée simultanée du poinçon 3, entraînant la libération de la pression ;
- relâchement immédiat de la masse de nitrure de bore ainsi obtenue durant 15 s ;
- second pressage vertical par actionnement du poinçon 3 de la presse dans la matrice 2 au delà de la valeur de la pression relative au premier pressage vertical, à savoir jusqu'à une pression de 10000 kg/cm², sous des vibrations d'une fréquence de l'ordre de 4 à 5 Hz et maintien de la pression pendant 3 s ;
- arrêt des vibrations et remontée simultanée du poinçon 3 entraînant la libération de la pression ;
- extraction par le bas du barreau 1 homogène.

Le procédé de fabrication selon cette troisième variante présente l'avantage principal qu'il ne nécessite pas l'extraction du barreau 1 précompacté avant le second pressage, ce qui permet de réduire considérablement le temps du cycle complet pour obtenir finalement le barreau 1 homogène présentant une hauteur de 8 mm et un diamètre de 15 mm, et avec une densité supérieure à 98 %.

Ces trois variantes du procédé de fabrication, par voie sèche ou par voie humide permettent, par conséquent, de conserver les caractéristiques isotropiques du nitrure de bore.

Bien entendu, les dimensions du volume dans la matrice 2 indiqué ci-dessus pourront être modifiées, mais, un volume trop important conduirait à des zones hétérogènes dans le barreau 1 et donc à des tensions de rupture.

Une fois ce multipressage effectué, selon l'une des trois variantes décrites ci-dessus, on opère la déshydratation du barreau 1, car l'humidité est une source de chute de l'isolement et de la rigidité électrique. Cette déshydratation s'effectue dans une étuve sous un vide primaire de l'ordre de $10^{-2}$ torr à une température comprise entre 150 et 200°C pendant 24 heures.

Enfin, une fois le barreau déshydraté, on procède à son conditionnement. Ce dernier s'effectue dans la même étuve que celle prévue pour la déshydratation, en y introduisant le gaz neutre à faible taux d'ionisation, tel que de l'azote, de l'argon ou de l'hélium, le barreau 1 étant maintenu dans cette atmosphère pendant une minute avant son extraction.

On obtient donc, une fois ce procédé de fabrication terminé, un barreau 1 en nitrure de bore présentant une très forte densité, en tout état de cause supérieure ou égale à 98 % de la densité théorique, dont les isolements tant à froid qu'à chaud sont très élevés et dont les rigidités diélectriques, également tant à froid qu'à chaud, sont supérieures à 5000 V.

Utilisés pour la confection d'éléments chauffants 5 protégés, ces barreaux 1 permettent, par conséquent, auxdits éléments 5 de présenter des performances nouvelles (puissance par unité de surface, isolement à chaud, rigidité diélectrique).

L'invention a également pour objet un procédé de fabrication d'un élément chauffant protégé 5 principalement constitué par une enveloppe 6, telle qu'un tube métallique, à l'intérieur de laquelle se trouve au moins une résistance 7 noyée dans un isolant sous la forme de plusieurs barreaux 1 en nitrure de bore conforme à l'invention, caractérisé en ce qu'il consiste à réaliser essentiellement les opérations suivantes :

- perçage de chaque barreau 1 de plusieurs orifices 8 d'un diamètre voisin du diamètre du fil des résistances 7 ; ces orifices 8 pourront, par exemple, être au nombre de trois, six ou neuf ; la détermination du nombre des brins et de leurs formes (fil tendu ou boudin) est fonction des caractéristiques électriques de l'élément chauffant protégé 5 (puissance, tension, couplage) et découle de la loi de Joule ;
- montage des résistances 7 dans les barreaux 1 par empilage, en prenant soin de ne pas polluer les barreaux 1 avec des matières grasses métalliques ;
- sertissage des fils des résistances 7 à l'extrémité inférieure de l'élément chauffant protégé 5 ;
- sertissage des fils des résistances 7 aux amenées de courant 9 ;
- mise en place du collier ainsi constitué dans l'enveloppe 6 préalablement dégraissée ;
- mise en place des deux barreaux 1 respectivement aux extrémités supérieure et inférieure de l'enveloppe 6 afin de combler les zones vides ;
- étuvage pendant une durée de 8 heures à une température de 150°C de l'ensemble ainsi monté ;
- mise en place de cet ensemble dans du téflon afin de le maintenir ;
- rétreint de l'ensemble afin de supprimer l'espace se trouvant entre les barreaux 1 et l'enveloppe 6 ; ce rétreint entraîne une diminution du diamètre, cette opération se faisant en plusieurs phases et permettant un relâchement de l'enveloppe 6 (par exemple une diminution du diamètre de 22,3 mm à 19 mm s'effectue en deux phases, la première de 22,3 mm à 21 mm, et la seconde de 21 mm à 19 mm) ;
- extraction du bouchon en téflon de l'extrémité inférieure de l'enveloppe 6 ;
- nettoyage interne de l'enveloppe 6 ;
- soudure étanche 12 de l'extrémité métallique 13, cette dernière présentant une géométrie évitant le décollement des films fluides.

Un tel procédé convient pour la fabrication d'éléments chauffants protégés 5, soit à haute température, soit à haute tension, soit à diffusivité variable.

En ce qui concerne le procédé de fabrication relatif à un élément chauffant protégé 5 à haute température, c'est-à-dire susceptible de dépasser en utilisation une température de 1000°C, on réalise avant le montage des résistances 7 une enduction de quelques microns à base de composés halogénés, par trempage des résistances 7.

Une telle enduction à base de composés halogénés, tels que, par exemple, de l'iode, permet, par réaction thermochromique, de minimiser l'usure thermique du fil chauffant de la résistance 7, par formation d'un halogénure métallique qui a la propriété de se déposer sur les zones les plus chaudes, ces zones étant, dans ce cas, le fil chauffant de la résistance 7.

L'élément chauffant protégé 5 ainsi obtenu peut, selon une première variante de réalisation, présenter une enveloppe métallique 6 en alliage réfractaire tel qu'un acier inoxydable à forte teneur de Nickel (supérieure à 30 %), par exemple, celui connu sous la dénomination commerciale Inconel 600, afin de pouvoir atteindre en utilisation une température de l'ordre de 1300°C.

Selon une seconde variante de réalisation, cet élément chauffant protégé 5 peut présenter une enveloppe 6 en céramique telle que l'alumine, afin de pouvoir atteindre en utilisation une température de l'ordre de 1500°C.

La température de 1500°C atteinte par ces éléments chauffants protégés 5 est donc bien supérieure à celle obtenue par les éléments en céramique classique (de l'ordre de 1000°C). En outre, ces éléments 5, qui comportent d ailleurs une âme métallique multifilaire en métal réfractaire (tungstène, molybdène, etc...), compte tenu des propriétés des fils métalliques des résistances 7, pourront être alimentés par un système de régulation beaucoup plus simple que celui utilisé actuellement (par exemple, fonctionnement sur un réseau à tension industrielle normale et non basse tension comme pour les éléments céramiques). Un tel élément chauffant protégé 5 pourra, à titre d'exemple, comporter trois fils de tungstène en forme de boudin, mis en place dans les barreaux 1 conformes à l'invention, l'ensemble se trouvant placé dans une enveloppe 6 métallique ou en céramique et scellée à l'extrémité où sortent les amenées de courant 9. De tels éléments chauffants protégés 5 seront, par exemple, utilisés dans des dispositifs de chauffage d'air à haute température.

En ce qui concerne les éléments chauffants protégés 5 à haute tension selon l'invention, ils présentent des amenées de courant 9, noyées dans l'un des deux barreaux 1 d'extrémité, arrondies et parfaitement polies, afin d'éviter des discontinuités des champs électriques entraînant des amorçages électriques, les amenées de courant 9 étant, en outre, enveloppées dans une feuille 10 de dialyl-théréphtalate, elle-même recouverte d'une gaine 11 thermorétractable isolante en polyoléfine modifié, cet élément chauffant protégé 5 étant ainsi susceptible d'être alimenté à des tensions supérieures à 1000 V, tout en présentant des tensions de claquage à chaud supérieures à 3000 V.

Ainsi, ces éléments chauffants 5 répondent parfaitement aux normes de sécurités liées à l'utilisation de tensions nettement supérieures à 1000 V. L'augmentation des tensions disruptives de l'isolant est obtenue grâce à l'utilisation des barreaux 1 en nitrure de bore conformes à l'invention. L'aménagement des pièces sous tension et leur position géométrique pour éviter des variations brutales et des discontinuités des champs électriques, entraînant des amorçages électriques, sont obtenus grâce aux amenées de courant 9 arrondies et polies. La continuité des champs électriques est maintenue longitudinalement le long des résistances 7, grâce au calibrage de celles-ci. Il est à noter que le diamètre des résistances 7 est identique à celui des amenées de courant 9 (voir figures 3 et 4 des dessins annexés). Enfin, pour éviter les tensions de contournement au niveau des amenées de courant 9, on prévoit d'envelopper ces dernières, dans la feuille 10, elle-même recouverte de la gaine 11 (voir figure 5 des dessins annexés). Cette feuille 10 de dialyl-théréphtalate pourra, par exemple, être une feuille telle que celle connue sous la dénomination commerciale Mylard.

Bien entendu, lors du procédé de fabrication de tels éléments à haute tension 5, il y aura lieu de préserver la continuité du champ électrique le long des amenées de courant 9 des résistances 7 (dont les fils sont en NiCr ou en FeCr/Alu ou autre alliage conducteur) qui peuvent être sous la forme d'un fil tendu ou d'un fil bobiné.

La géométrie du perçage effectué sur les barreaux 1 permet le transfert des flux thermiques importants tout en limitant la distance entre le fil de la résistance 7 et la surface interne de l'enveloppe 6. En effet, un distance trop importante, c'est-à-dire supérieure à 3 mm, entraînerait un gradient de température trop élevé pour une utilisation traditionnelle supérieure ou égale à 200°C. Ces éléments chauffants 5 permettent, par conséquent, la mise en place de puissances importantes dans de faibles volumes (diamètre du tube inférieur à 20 mm), tout en autorisant une alimentation à des tensions nettement supérieures à 1000 V.

De tels éléments chauffants protégés 5 à haute tension à bas, moyen ou haut flux, pourront, par exemple, être soudés sur des plateaux ou bouchons, afin de constituer des thermoplongeurs ou des ensembles chauffants.

En ce qui concerne les éléments chauffants protégés 5 à diffusivité variable, ils comprennent des barreaux 1 conformes à l'invention, ces derniers présentant encore, outre le nitrure de bore, un second matériau, de chaleur spécifique et de conductibilité thermique différentes, ce second matériau étant soit disposé au centre des barreaux 1, soit mélangé dans le nitrure de bore lui-même.

Il convient, bien entendu, de mélanger ce second matériau au nitrure de bore ou de le disposer au centre du nitrure de bore sous forme de poudre, préalablement à toute opération relative au procédé de fabrication des barreaux 1 conformes à l'invention.

L'adaptation de la diffusivité aux propriétés transitoires recherchées passe donc par l'adjonction au nitrure de bore d'un autre matériau, isolant ou non, de chaleur spécifique et de conductibilité thermique différentes. Cette adjonction se fait de deux manières, soit par mise en place au centre du barreau 1, d'un corps à caractéristiques physiques différentes (par exemple diamètre extérieur du barreau 1 : 19 mm et diamètre du corps : 8 mm), soit par le biais d'un mélange d'isolants. Le rapport en poids des deux corps constituant ce mélange conditionne la propriété recherchée, ceci pour la même plage de température pour les deux corps. Par exemple, on a la relation pour la chaleur spécifique :

$$mc_p = 1/2\,(m_1c_{p_1} + m_2c_{p_2}).$$

On obtient ainsi un élément chauffant protégé 5 ou simulateur à propriété thermique intermédiaire entre les propriétés thermiques d'un élément chauffant 5 constitué uniquement du matériau de base (en l'occurrence, le nitrure de bore) ou uniquement du second matériau.

Si on ajoute le second matériau au centre du barreau 1, il peut s'agir d'un coeur en magnésie ou en alumine.

Si on mélange le second matériau directement dans le nitrure de bore lui-même, il peut s'agir avantageusement de magnésie. Mais on pourra utiliser également d'autres isolants, tels que silice, quartz, etc... Le mélange pourra s'effectuer, par exemple, dans une proportion de 50 % pour les deux matériaux.

Ces éléments chauffants 5 à diffusivité variable pourront également être à haute tension, en présentant les caractéristiques énoncées ci-dessus, relatives aux éléments 5 à haute tension.

Une application industrielle de tels éléments chauffants protégés 5 à diffusivité variable pourra consister en un élément à faible capacité calorifique comportant une âme métallique.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

**Revendications**

1. Procédé de fabrication d'un barreau (1) isolant en nitrure de bore, principalement utilisé dans des éléments chauffants protégés (5), caractérisé en ce qu'il consiste essentiellement à effectuer en premier lieu un multipressage vertical du nitrure de bore sous forme de poudre, en réalisant plusieurs pressages consécutifs, éventuellement sous vibrations, d'une masse de nitrure de bore sous forme de poudre, avec mise en oeuvre de pressions limites croissantes d'un pressage au suivant, maintien desdites pressions limites pendant une durée déterminée et prévision d'une phase de relâchement de la masse de nitrure de bore comprimée après chaque pressage, puis à procéder à une déshydratation sous un vide primaire du barreau (1) obtenu après les différents pressages, et enfin à opérer le conditionnement du barreau (1) déshydraté en le disposant dans une atmosphère de gaz neutre à faible taux d'ionisation, la succession de ces différentes étapes permettant l'obtention d'un barreau (1) de très forte densité, notamment supérieure ou égale à 98 % de la densité théorique, et dont les isolements et les rigidités diélectriques tant à froid qu'à chaud sont très élevés.

2. Procédé selon la revendication 1, caractérisé en ce que pour le multipressage vertical du nitrure de bore sous forme de poudre, on effectue les opérations suivantes :
   - remplissage de la matrice (2) d'une presse avec du nitrure de bore sous forme de poudre ;
   - premier pressage vertical par actionnement du poinçon (3) de la presse dans la matrice (2) ;
   - suspension du mouvement de descente du poinçon (3) et maintien de la pression ;
   - remontée du poinçon (3) entraînant la libération de la pression ;
   - extraction par le bas de la masse de nitrure de bore obtenue, permettant ainsi un relâchement immédiat ;
   - réintroduction de cette masse dans la matrice (2) qui est recentrée par rapport à l'axe de pression (4) ;
   - second pressage vertical par actionnement du poinçon (3) de la presse dans la matrice (2) ;
   - suspension du mouvement de descente du poinçon (3) et maintien de la pression ;
   - remontée du poinçon (3) entraînant la libération de la pression ;
   - extraction par le bas du barreau (1) homogène ainsi obtenu.

3. Procédé selon la revendication 2, caractérisé en ce que les opérations pour le multipressage vertical du nitrure de bore sous forme de poudre sont avantageusement réalisées de la façon suivante :
   - remplissage dans la matrice (2) d'un volume de 62 mm de hauteur et 15,1 mm de diamètre avec 2,5 à 3 g de poudre de nitrure de bore ;
   - premier pressage vertical jusqu'à une pression de 2500 kg/cm$^2$, le temps de descente du poinçon (3) étant de l'ordre de 3 à 4 s ;
   - suspension du mouvement de descente du poinçon (3) et maintien de la pression à 2500 kg/cm$^2$ pendant 1 s ;
   - remontée du poinçon (3) ;
   - extraction de la masse de nitrure de bore et relâchement durant 15 s ;
   - réintroduction de la masse et recentrage ;
   - second pressage vertical jusqu'à une pression de 13000 kg/cm$^2$ ;

- suspension du mouvement de descente du poinçon (3) et maintien de la pression à 13000 kg/cm$^2$ pendant 2 s ;
- remontée du poinçon (3) ;
- extraction du barreau (1) homogène ainsi obtenu.

4. Procédé selon l'une quelconque des revendications 2 et 3, caractérisé en ce que lors de l'opération de réintroduction de la masse de nitrure de bore dans la matrice (2) pour le second pressage vertical, on l'oriente de 90° par rapport à sa position lors du premier pressage, ce afin d'orienter différemment les forces de pression et d'obtenir ainsi une homogénéité évitant tout clivage et fissuration.

5. Procédé selon l'une quelconque des revendications 2 à 4, caractérisé en ce que préalablement à l'opération de réintroduction dans la matrice (2) de la masse de nitrure de bore pour le second pressage vertical, on l'imbibe d'alcool en la déposant sur un feutre préalablement imbibé.

6. Procédé selon la revendication 1, caractérisé en ce que pour le multipressage vertical du nitrure de bore sous forme de poudre, on effectue les opérations suivantes :
   - remplissage de la matrice (2) d'une presse avec du nitrure de bore sous forme de poudre ;
   - premier pressage vertical par actionnement du poinçon (3) de la presse dans la matrice (2) ;
   - suspension du mouvement de descente du poinçon (3) et maintien de la pression ;
   - augmentation de la pression par pressage vertical, cette fois-ci sous vibrations, et maintien de la pression ;
   - arrêt des vibrations et remontée simultanée du poinçon (3), entraînant la libération de la pression ;
   - relâchement immédiat de la masse de nitrure de bore ainsi obtenue ;
   - second pressage vertical par actionnement du poinçon (3) de la presse dans la matrice (2) au delà de la valeur de la pression relative au premier pressage vertical, à nouveau sous vibrations ;
   - arrêt des vibrations et remontée simultanée du poinçon (3) entraînant la libération de la pression ;
   - extraction par le bas du barreau (1) homogène ainsi obtenu.

7. Procédé selon la revendication 6, caractérisé en ce que les opérations pour le multipressage vertical du nitrure de bore sous forme de poudre sont avantageusement réalisées de la façon suivante :
   - remplissage dans la matrice (2) d'un volume de 62 mm de hauteur et 15,1 mm de diamètre avec 2,5 à 3 g de poudre de nitrure de bore ;
   - premier pressage vertical jusqu'à une pression de 2000 kg/cm$^2$, le temps de descente du poinçon (3) étant de l'ordre de 3 à 4 s ;
   - suspension du mouvement de descente du poinçon (3) et maintien de la pression à 2000 kg/cm$^2$ pendant 2 s ;
   - augmentation de la pression par pressage vertical jusqu'à une pression de 4500 kg/cm$^2$, sous des vibrations d'une fréquence de l'ordre de 4 à 5 Hz, et maintien de la pression pendant 2 s ;
   - arrêt des vibrations et remontée du poinçon (3) ;
   - relâchement de la masse de nitrure de bore durant 15 s ;
   - second pressage vertical jusqu'à une pression de 10000 kg/cm$^2$, sous des vibrations d'une fréquence de l'ordre de 4 à 5 Hz, et maintien de la pression pendant 3 s ;
   - arrêt des vibrations et remontée simultanée du poinçon (3) entraînant la libération de la pression ;
   - extraction par le bas du barreau (1) homogène ainsi obtenu.

8. Procédé selon la revendication 1, caractérisé en ce que la déshydratation s'effectue dans une étuve sous un vide primaire de l'ordre de 10$^{-2}$ torr à une température comprise entre 150 et 200°C pendant 24 heures.

9. Procédé selon la revendication 1, caractérisé en ce que le conditionnement du barreau (1) déshydraté s'effectue dans la même étuve que celle prévue pour la déshydratation, en y introduisant le gaz neutre a faible taux d'ionisation, tel que de l'azote, de l'argon ou de l'hélium, le barreau (1) étant maintenu dans cette atmosphère pendant une minute avant son extraction.

10. Procédé selon l'une quelconque des revendications 2 à 9, caractérisé en ce qu'on ajoute au nitrure de bore préalablement à toute opération un second matériau de caractéristiques physiques différentes, soit au centre du nitrure de bore sous forme de poudre, soit en le mélangeant à ladite poudre de nitrure de bore.

**11.** Barreau isolant obtenu d'après le procédé de fabrication selon l'une quelconque des revendications 1 à 10, dont la densité est supérieure ou égale à 98 % de la densité théorique, et dont les isolements et les rigidités diélectriques tant à froid qu'à chaud sont très élevés.

**12.** Procédé de fabrication d'un élément chauffant protégé (5) principalement constitué par une enveloppe (6), telle qu'un tube métallique, à l'intérieur de laquelle se trouve au moins une résistance (7) noyée dans un isolant sous la forme de plusieurs barreaux (1) en nitrure de bore selon la revendication 11, caractérisé en ce qu'il consiste à réaliser essentiellement les opérations suivantes :
- perçage de chaque barreau (1) de plusieurs orifices (8) d'un diamètre voisin du diamètre du fil des résistances (7) ;
- montage des résistances (7) dans les barreaux (1) par empilage ;
- sertissage des fils des résistances (7) à l'extrémité inférieure de l'élément chauffant protégé (5) ;
- sertissage des fils des résistances (7) aux amenées de courant (9) ;
- mise en place du collier ainsi constitué dans l'enveloppe (6) préalablement dégraissée ;
- mise en place des deux barreaux (1) respectivement aux extrémités supérieure et inférieure de l'enveloppe (6) afin de combler les zones vides ;
- étuvage pendant une durée de 8 heures à une température de 150°C de l'ensemble ainsi monté ;
- mise en place de cet ensemble dans du téflon afin de le maintenir ;
- rétreint de l'ensemble afin de supprimer l'espace se trouvant entre les barreaux (1) et l'enveloppe (6) ;
- extraction du bouchon en téflon de l'extrémité inférieure de l'enveloppe (6) ;
- nettoyage interne de l'enveloppe (6) ;
- soudure étanche (12) de l'extrémité métallique (13), cette dernière présentant une géométrie évitant le décollement des films fluides.

**13.** Procédé de fabrication selon la revendication 12, caractérisé en ce que pour l'obtention d'un élément chauffant protégé (5) à haute température, c'est-à-dire susceptible de dépasser en utilisation une température de 1000°C, on réalise avant le montage des résistances (7) une enduction de quelques microns à base de composés halogénés, par trempage des résistances (7).

**14.** Elément chauffant protégé, à haute température, principalement constitué par une enveloppe (6), telle qu'un tube métallique, à l'intérieur de laquelle se trouve au moins une résistance (7) noyée dans un isolant sous la forme de plusieurs barreaux (1) selon la revendication 11, obtenu d'après le procédé de fabrication selon la revendication 13, présentant une enveloppe métallique (6) en alliage réfractaire tel qu'un acier inoxydable à forte teneur de Nickel, afin de pouvoir atteindre en utilisation une température de l'ordre de 1300°C.

**15.** Elément chauffant protégé, à haute température, principalement constitué par une enveloppe (6), telle qu'un tube métallique, à l'intérieur de laquelle se trouve au moins une résistance (7) noyée dans un isolant sous la forme de plusieurs barreaux (1) selon la revendication 11, obtenu d'après le procédé de fabrication selon la revendication 13, présentant une enveloppe (6) en céramique telle que l'alumine, afin de pouvoir atteindre en utilisation une température de l'ordre de 1500°C.

**16.** Elément chauffant protégé, à haute tension, principalement constitué par une enveloppe (6), telle qu'un tube métallique, à l'intérieur de laquelle se trouve au moins une résistance (7) noyée dans un isolant sous la forme de plusieurs barreaux (1) selon la revendication 11, obtenu d'après le procédé de fabrication selon la revendication 12, dont les amenées de courant (9) noyées dans l'un des deux barreaux (1) d'extrémité sont arrondies et parfaitement polies, afin d'éviter des discontinuités des champs électriques entraînant des amorçages électriques, les amenées de courant (9) étant, en outre, enveloppées dans une feuille (10) de dialyl-théréphtalate, elle-même recouverte d'une gaine (11) thermorétractable isolante en polyoléfine modifié, cet élément chauffant protégé (5) étant ainsi susceptible d'être alimenté à des tensions supérieures à 1000 V, tout en présentant des tensions de claquage à chaud supérieures à 3000 V.

**17.** Elément chauffant protégé à diffusivité variable, principalement constitué par une enveloppe (6), telle qu'un tube métallique, à l'intérieur de laquelle se trouve au moins une résistance (7) noyée dans un isolant sous la forme de plusieurs barreaux (1) selon la revendication 11, obtenu d'après le procédé de fabrication selon la revendication 12, la composition des barreaux (1), outre le nitrure de bore, présentant encore un second matériau, de chaleur spécifique et de conductibilité thermique différentes, ce second matériau étant soit disposé au centre des barreaux (1), soit mélangé dans le nitrure de bore lui-même.

18. Elément chauffant protégé selon la revendication 17, caractérisé en ce que les barreaux (1) présentent dans leur centre un coeur en magnésie ou en alumine.

19. Elément chauffant protégé selon la revendication 17, caractérisé en ce que les barreaux (1) sont composés d'un mélange de nitrure de bore et de magnésie.

20. Elément chauffant protégé selon l'une quelconque des revendications 17 à 19, caractérisé en ce que les amenées de courant (9) noyées dans l'un des deux barreaux (1) d'extrémité sont arrondies et parfaitement polies, afin d'éviter des discontinuités des champs électriques entraînant des amorçages électriques, les amenées de courant (9) étant, en outre, enveloppées dans une feuille (10) de dialylthéréphtalate, elle-même recouverte d'une gaine (11) thermorétractable isolante en polyoléfine modifié, cet élément chauffant protégé (5) étant ainsi susceptible d'être alimenté à des tensions supérieures à 1000 V, tout en présentant des tensions de claquage à chaud supérieures à 3000 V.

## Claims

1. A method of fabricating a boron nitride insulating rod (1), mainly used in sheathed beating elements (5), characterised in that it consists essentially of performing in the first place vertical multiple compression of powdered boron nitride, by carrying out several consecutive compression procedures, optionally with vibration, on a mass of powdered boron nitride, applying limited pressures which increase from one compression to the next, maintaining the said limited pressures for a fixed time and providing a relaxation phase for the mass of compressed baron nitride after each compression, then proceeding to dehydrate under low vacuum the rod (1) obtained after the various compressions, and finally conditioning the dehydrated rod (1) by placing it in an atmosphere of a neutral gas with a low degree of ionisation, the sequence of these various stages allowing the production of a rod (1) of very high density, in particular greater than or equal to 98% of the theoretical density, and whose insulation properties and dielectric strengths are very high, when cold and when hot.

2. A method according to Claim 1, characterised in that the following operations are performed during vertical multiple compression of the powdered boron nitride:
   - filling the cavity (2) in a press with powdered baron nitride;
   - performing a first vertical compression by activating the press ram (3) in the cavity (2);
   - stopping the downward motion of the ram (3) and maintaining the pressure;
   - lifting the ram (3) causing release of the pressure;
   - removing the mass of baron nitride obtained, via the base, permitting immediate relaxation;
   - reintroducing this mass into the cavity (2) and recentering with respect to the compression axis (4);
   - performing a second vertical compression by activating the press ram (3) in the cavity (2);
   - stopping the downward movement of the ram (3) and maintaining the pressure;
   - lifting the ram (3) causing release of the pressure;
   - removing the homogeneous rod (1) thus obtained, via the base.

3. A method according to Claim 2, characterised in that the operations for vertical multiple compression of powdered baron nitride are advantageously performed in the following manner:
   - filling the cavity (2) with a volume of height 62 mm and diameter 15.1 mm with 2.5 to 3 g of baron nitride powder;
   - performing a first vertical compression at a pressure of up to 2500 kg/cm$^2$, the time of descent of the ram (3) bed of the order of 3 to 4 s:
   - stopping the downward motion of the ram (3) and maintaining the pressure at 2500 kg/cm$^2$ for 1 s;
   - lifting the ram (3);
   - removing the mass of boron nitride and relaxing for 15 s;
   - reintroducing the mass and recentering;
   - performing a second vertical compression at a pressure of up to 13000 kg/cm$^2$;
   - stopping the downward motion of the ram (3) and maintaining the pressure at 13000 kg/cm$^2$ for 2 s;
   - lifting the ram (3);

- removing the homogeneous rod (1) thus obtained.

4. A method according to any of Claims 2 and 3, characterised in that during the operation to reintroduce the mass of boron nitride into the cavity (2) for the second vertical compression, it is turned through 90° with respect to its position during the first compression, in order to position the compression forces differently and thus to obtain homogeneity while avoiding any cleavage or splitting.

5. A method according to any of Claims 2 to 4, characterised in that the mass of baron nitride is saturated with alcohol by laying it on a previously soaked felt before the operation to reintroduce it into the cavity (2) for the second vertical compression.

6. A method according to Claim 1, characterised in that the following operations are performed during vertical multiple compression of the powdered boron nitride:
    - filling the press cavity (2) with powdered boron nitride;
    - performing a first vertical compression by activating the press ram (3) in the cavity (2);
    - stopping the downward motion of the ram (3) and maintaining the pressure;
    - increasing the pressure by vertical compression, this time with vibration, and maintaining the pressure;
    - stopping the vibrations and simultaneously lifting the ram (3), causing release of the pressure;
    - immediate relaxation of the mass of boron nitride thus obtained;
    - performing a second vertical compression by activating the press ram (3) in the cavity (2) to a pressure which is greater than that during the first vertical compression, again with vibration;
    - stopping the vibration and simultaneously lifting the ram (3), causing release of the pressure;
    - removing the homogeneous rod (1) thus obtained via the base.

7. A method according to Claim 6, characterised in that the operations for vertical multiple compression of powdered boron nitride are advantageously performed in the following manner:
    - filling the cavity (2) with a volume of height 62 mm and diameter 15.1 mm with 2.5 to 3 g of boron nitride powder;

- performing a first vertical compression at a pressure of up to 2000 kg/cm$^2$, the time of descent of ram (3) being of the order of 3 to 4 s;
    - stopping the downward motion of the ram (3) and maintaining the pressure at 2000 kg/cm$^2$ for 2 s;
    - increasing the pressure by vertical compression up to a pressure of 4500 kg/cm$^2$, with vibration at a frequency of the order of 4 to 5 Hz, and maintaining the pressure for 2 s;
    - stopping the vibration and lifting the ram (3);
    - relaxing the mass of baron nitride for 15 s;
    - performing a second vertical compression at a pressure of up to 10000 kg/cm$^2$, with vibration at a frequency of the order of 4 to 5 Hz, and maintaining the pressure for 3 s;
    - stopping the vibration and simultaneously lifting the ram (3) causing release of the pressure;
    - removing the homogeneous rod (1) thus obtained via the base.

8. A method as in Claim 1, characterised in that dehydration is carried out for 24 hours in an oven under a low vacuum of the order 10$^{-2}$ torr at a temperature between 150 and 200°C.

9. A method according to Claim 1, characterised in that conditioning of the dehydrated rod (1) is performed in the same oven as that used for dehydration by introducing therein the neutral gas with a low degree of ionisation, such as nitrogen, argon or helium, the rod (1) being maintained in this atmosphere for one minute before being removed.

10. A method according to any of Claims 2 to 9, characterised in that before any action, a second material with different physical characteristics is added to the boron nitride, either in the centre of the powered boron nitride or by mixing it with the said boron nitride powder.

11. An insulating rod obtained by the method of fabrication according to any of Claims 1 to 10, whose density is greater than or equal to 98% of the theoretical density and whose insulation properties and dielectric strengths are very high when cold and when hot.

12. A method of fabricating a sheathed heating element (5) consisting in principle of a jacket (6), such as a metal tube, inside which is located at least one resistance (7) embedded in an insulator in the form of several boron nitride rods (1) according to claim 11, characterized in that it comprises in principle performing the following operations:

- piercing each rod (1) with several holes (8) with a diameter close to the diameter of the resistance (7) wire;
- mounting the resistances (7) in the rods (1) by packing;
- crimp-connecting the resistance (7) wires at the lower end of the sheathed heating element (5):
- crimp-connecting the resistance (7) wires to the power supply leads (9);
- positioning the yoke thus constituted in the previously degreased jacket (6);
- positioning two rods (1) at the upper and lower ends respectively of the jacket (6) in order to fill the empty space;
- oven drying the unit thus assembled for a period of 8 hours at a temperate of 150°C;
- positioning this unit in teflon in order to keep it together;
- reshaping the unit in order to eliminate the spaces between the rods (1) and the jacket (6);
- removing the teflon bung from the lower end of the jacket (6);
- cleaning the inside of the jacket (6);
- seal-welding (12) the metal end (13), this latter having a geometry which discourages fluid films from running off.

13. A method of fabrication according to Claim 12, characterised in that in order to obtain a high temperature sheathed heating element (5), that is to say able to exceed a temperature of 1000°C in use, a coating of a few microns, based on halogenated compounds, is applied by immersing the resistances (7) before mounting the resistances (7).

14. A high temperature sheathed beating element, comprising in principle a jacket (6), such as a metal tube, inside which is located at least one resistance (7) embedded in an insulator in the form of several rods (1) according to Claim 11, obtained by the method of fabrication according to Claim 13, having a metal jacket (6) made from a heat-resisting alloy such as a stainless steel with a high nickel content, in order to be able to reach a temperature of the order of 1300°C in use.

15. A high temperature sheathed heating element comprising in principle a jacket (6) such as a metal tube, inside which is located at least one resistance (7) embedded in an insulator in the form of several rods (1) according to Claim 11, obtained by the method of fabrication according to Claim 13, having a jacket (6) made from a ceramic such as alumina, in order to be able to reach a temperature of the order of 1500°C in use.

16. A high temperature sheathed heating element, in principle comprising a jacket (6), such as a metal tube, inside which is located at least one resistance (7) embedded in an insulator in the form of several rods (1) according to Claim 11, obtained by the method of fabrication according to Claim 12, whose power supply leads (9) embedded in one of the two rods (1) are rounded and perfectly polished at the end in order to avoid discontinuities in the electric fields causing electric arcing, the power supply leads being, in addition, enveloped in a film (10) of diallyl terephthalate, this being covered in an insulating thermoretractable casing (11) of modified polyolefin, this sheathed heating element (5) thus being capable of being supplied with voltages greater than 1000 V, by producing breakdown voltages when hot greater than 3000 V.

17. A sheathed heating element with a variable diffusion coefficient, comprising in principle a jacket (6), such as a metal tube, inside which is located at least one resistance (7) embedded in an insulator in the form of several rods (1) according to Claim 11, obtained by the method of fabrication according to Claim 12, the composition of the rods (1) including, in addition to boron nitride, a second material with a different specific heat and thermal conductivity, this second material being either located in the centre of the rods (1) or mixed with the boron nitride itself.

18. A sheathed heating element according to Claim 17, characterized in that the rods (1) have a core of magnesia or alumina at their centre.

19. A sheathed heating element according to Claim 17, characterised in that the rods (1) are composed of a mixture of boron nitride and magnesia.

20. A sheathed heating element according to one of Claims 17 to 19, characterised in that the current supply lead (9) embedded in one of the two rods (1) are rounded and perfectly polished at the end, in order to avoid discontinuities in the electric fields causing electric arcing, the power supply leads (9) being, in addition, enveloped in a film (10) of diallyl terephthalate, this being covered in an insulating thermoretractable casing (11) of modified polyolefin, this sheathed heating element (5) thus being capable of being supplied with voltages greater than 1000 V, by producing breakdown voltages when hot greater than 3000 V.

## Patentansprüche

1. Herstellungsverfahren eines Isolierstabes (1) aus Bornitrid, insbesondere in geschützten Heizelementen (5), dadurch gekennzeichnet, daß es insbesondere daraus besteht, zunächst ein senkrechtes Mehrfachpressen des Bornitrids in Pulverform durchzuführen, indem mehrere aufeinanderfolgende Verpressungen, eventuell unter Schwingung, einer Bornitridmasse in Pulverform ausgeführt werden, unter Benutzung von zunehmenden Grenzdrücken von einer Verpressung zur anderen, Aufrechterhaltung der besagten Grenzdrücke während einer bestimmten Dauer und Verplanung einer Entspannungsphase der komprimierten Bornitridmasse nach jeder Verpressung, danach wird unter einem Grobvakuum eine Dehydratisierung des nach den verschiedenen Verpressungen erhaltenen Stabes (1) vorgenommen und schließlich wird der dehydratisierte Stab (1) konditioniert, indem man ihn in eine Atmosphäre von Neutralglas mit schwachem Ionisationsgrad legt, wobei die Folge dieser verschiedenen Phasen es erlauben, einen Stab (1) hoher Dichte zu erhalten, namentlich höher oder gleich 98 % der theoretischen Dichte und dessen Isolierungen und die elektrischen Steifigkeiten in kaltem und warmem Zustand sehr hoch sind.

2. Verfahren nach Anspruch 1, dadurch gekennzeichnet, daß für die senkrechte Verpressung des Bornitrids in Pulverform folgende Arbeitsgänge durchgeführt werden:

   Auffüllen einer Presseform (2) mit Bornitrid in Pulverform;

   erstes senkrechtes Verpressen durch Betätigung des Stempels (3) der Presse in der Form (2);

   Abstellung der Abwärtsbewegung des Stempls (3) und Druckhaltung;

   Auffahren des Stempels (3), was den Druck freisetzt;

   Abzug von unten der erhaltenen Bornitridmasse, was eine sofortige Entspannung gestattet;

   Wiedereinführen dieser Masse in die Form (2), welche in Bezug auf die Druckachse (4) erneut zentriert wird;

   zweites senkrechtes Verpressen durch Betätigung des Stempels (3) der Presse in der Form (2);

   Abstellung der Abwärtsbewegung des Stempels (3) und Druckhaltung;

   Auffahren des Stempels (3), was den Druck freisetzt;

   Abzug von unten des so erhaltenen gleichmäßigen Stabes (1).

3. Verfahren nach Anspruch 2, dadurch gekennzeichnet, daß die Arbeitsgänge für das senkrechte Mehrfachverpressen von Bornitrid in Pulverform vorteilhafterweise wie folgt durchgeführt werden:

   Füllen der Form (2) eines Volumens von 62 mm Höhe und 15,1 mm Durchmesser mit 2,5 bis 3 g Bornitridpulver;

   erstes senkrechtes Verpressen bis zu einem Druck von 2500 kg/cm$^2$, wobei die Abstiegzeit des Stempels (3) 3 bis 4 s beträgt;

   Abstellung der Abwärtsbewegung des Stempels (3) und Druckhaltung auf 2500 kg/cm$^2$ während 1 s;

   Auffahren des Stempels (3);

   Abzug der Bornitridmasse und Entspannung während 15 s;

   Wiedereinführen der Masse und neues Zentrieren;

   zweites senkrechtes Verpressen bis zu einem Druck von 13000 kg/cm$^2$;

   Abstellung der Abwärtsbewegung des Stempels (3) und Druckhaltung bei 13000 kg/cm$^2$ während 2 s;

   Auffahren des Stempels (3);

   Abzug des so erhaltenen gleichmäßigen Stabes (1).

4. Verfahren nach irgendeinem der Ansprüche 2 und 3, dadurch gekennzeichnet, daß beim wiedereinfuhren der Bornitridmasse in die Form (2) für die zweite senkrechte Verpressung, man sie um 90° in Bezug auf ihre Stellung beim ersten Verpressen dreht, dies um die Druckkräfte verschieden auszurichten und so eine Gleichmäßigkeit zu erhalten, welche jegliche Spaltung und Rißbildung vermeidet.

5. Verfahren nach irgendeinem der Ansprüche 2 bis 4, dadurch gekennzeichnet, daß man vor dem Wiedereinführen der Bornitridmasse in die Form (2) für das zweite senkrechte Verpressen, die Masse mit Alkohol tränkt, indem man sie auf einen im voraus getränkten Filz legt.

6. Verfahren nach Anspruch 1, dadurch gekennzeichnet, daß man für das senkrechte Mehrfachverpressen des Bornitrids in Pulverform folgende Arbeitsgänge durchführt:

Auffüllen der Form (2) einer Presse mit Bornitrid in Pulverform;

erstes senkrechtes Verpressen durch Betätigung des Stempels (3) der Presse in der Form (2);

Abstellung der Abwärtsbewegung des Stempels (3) und Druckhaltung;

Erhöhung des Drucks durch senkrechtes Verpressen, diesmal unter Schwingung und Druckhaltung;

Abschalten der Schwingung und gleichzeitiges Auffahren des Stempels (3), was den Druck freisetzt;

sofortige Entspannung der so erhaltenen Bornitridmasse;

zweites senkrechtes Verpressen durch Betätigung des Stempels (3) der Presse in der Form (2) über den beim ersten senkrechten Verpressen benutzten relativen Druck, wieder unter Schwingung;

Abschalten der Schwingungen und gleichzeitiges Auffahren des Stempels (3), was den Druck freisetzt;

Abzug von unten des so erhaltenen gleichmäßigen Stabes (1).

7. Verfahren nach Anspruch 6, dadurch gekennzeichnet, daß die Arbeitsgänge für das senkrechte Mehrfachverpressen des Bornitrids in Pulverform vorteilhafterweise wie folgt durchgeführt werden:

Füllen der Form (2) eines Volumens von 62 mm Höhe und 15,1 mm Durchmesser mit 2,5 bis 3 g Bornitridpulver;

erstes senkrechtes Verpressen bis zu einem Druck von 2000 kg/cm³, wobei die Abstiegszeit des Stempels (3) 3 bis 4 s beträgt;

Abstellung der Abwärtsbewegung des Stempels (3) und Druckhaltung auf 2000 kg/cm² während 2 s;

Erhöhung des Drucks durch senkrechtes Verpressen bis zu einem Druck von 4500 kg/cm², unter Schwingungen mit einer Frequenz von 4 bis 5 Hz und Druckerhalt während 2 s;

Abschalten der Schwingungen und Auffahren des Stempels (3);

Entspannung der Bornitridmasse während 15 s; zweites senkrechtes Verpressen bis zu einem Druck von 10000 kg/cm² unter Schwingungen mit einer Frequenz von 4 bis 5 Hz und Druckerhalt während 3 s;

Abschalten der Schwingungen und Auffahren des Stempels (3);

Entspannung der Bornitridmasse während 15 s;

zweites senkrechtes Verpressen bis zu einem Druck von 10000 kg/cm² unter Schwingungen mit einer Frequenz von 4 bis 5 Hz und Druckerholt während 3 s;

Abschalten der Schwingungen und gleichzeitiges Auffahren des Stempels (3) was den Druck freisetzt;

Abzug von unten des so erhaltenen gleichmäßigen Stabes (1).

8. Verfahren nach Anspruch 1, dadurch gekennzeichnet, daß die Dehydratisierung in einem Grobvakuumschrank von $10^{-2}$ Torr bei einer Temperatur zwischen 150 bis 200 °C während 24 Stunden durchgeführt wird.

9. Verfahren nach dem Anspruch 1, dadurch gekennzeichnet, daß das Konditionieren des dehydratisierten Stabes (1) im gleichen Schrank wie für die Dehydratisierung vorgesehen, durchgeführt wird, indem man das neutrale Gas mit schwachem Ionisationsgrad, wie Stickstoff, Argon oder Helium, einführt, wobei der Stab (1) während einer Minute in dieser Atmosphäre gehalten wird, vor seiner Herausnahme.

10. Verfahren nach irgendeinem der Ansprüche 2 bis 9, dadurch gekennzeichnet, daß man dem Bornitrid vor jedem Arbeitsgang ein zweites Material mit verschiedenen physischen Eigenschaften beifügt, entweder im Zentrum des Bornitrids in Pulverform, oder indem man es dem Bornitridpulver beimischt.

11. Isolierender Stab, der nach dem Herstellungsverfahren gemäß irgendeinem der Ansprüche 1 bis 10 erhalten wird und dessen Dichte höher oder gleich 98 % der theoretischen Dichte ist und dessen Isolierungen und die elektrischen Steifigkeiten in kaltem und warmem Zustand sehr hoch sind.

12. Herstellungsverfahren eines geschützten Heizelementes (5), hauptsächlich aus einer Hülle (6), wie zum Beispiel eine Metallröhre, im Innern welcher sich mindestens ein in einem Isolator eingebetteter Widerstand befindet, bestehend, in Form mehrerer Stäbe (1) aus Bornitrid gemäß Anspruch 11, dadurch gekennzeichnet, daß dazu insbesondere folgende Arbeitsgänge durchzuführen sind:

Durchbohren jedes Stabes (1) mit mehreren Öffnungen (8) mit einem Durchmesser fast gleich dem Durchmesser des Drahtes der Widerstände (7);

Montieren der Widerstände (7) in die Stäbe (1) durch Stapelung;

Bördeln der Widerstandsdrähte (7) am unteren Ende des geschützten Heizelementes (5);

Bördeln der Widerstandsdrähte (7) an den Stromzuleitungen (9);

Anbringen der so gebildeten Schelle in der vorher entfetteten Hülle (6);

Anbringen der beiden Stäbe (1) an dem entsprechenden oberen und unteren Ende der Hülle (6), um die leeren Bereiche zu füllen;

Trocknen während einer Dauer von 8 Stunden bei einer Temperatur von 150 °C der so montierten Einheit;

Einziehung der Einheit, um den Raum, der sich zwischen den Stangen (1) und der Hülle (6) befindet, zu verdrängen;

Abnahme des Teflonpfropfens am unteren Ende der Hülle (6);

Reinigen des Innern der Hülle (6);

dichtes Schweißen (12) des metallischen Endes (13), wobei letzteres eine Geometrie aufweist, welche das Ablösen der flüssigen Folien ver hindert.

13. Herstellungsverfahren nach dem Anspruch 12, dadurch gekennzeichnet, daß, um ein hochtemperaturgeschütztes Heizelement (5) zu erhalten, das heißt, das bei der Benutzung eine Temperatur von 1000° C übersteigen kann, stellt man vor der Montage der Widerstände (7) einen Überzug von einigen Mikrometern auf der Basis von halogenhaltigen Verbindungen, durch Beschichtung der Widerstände (7), her.

14. Hochtemperaturgeschütztes Heizelement, hauptsächlich aus einer Hülle (6), wie zum Beispiel eine Metallröhre, im Innern welcher sich mindestens ein in einem Isolator eingebetteter Widerstand (7) befindet, bestehend, in Form mehrerer Stäbe (1) gemäß Anspruch 11, das gemäß dem Herstellungsverfahren nach Anspruch 13 erhalten wird und eine Metallhülle (6) aus einer hitzebeständigen Legierung, wie zum Beispiel ein Edelstahl mit hohem Nickelgehalt, aufweist, um bei der Benutzung eine Temperatur von 1300° C erreichen zu können.

15. Hochtemperaturgeschütztes Heizelement, hauptsächlich aus einer Hülle (6), wie zum Beispiel eine Metallröhre, im Innern welcher sich mindestens ein in einem Isolator eingebetteter Widerstand (7) befindet, bestehend, in Form mehrerer Stäbe (1) gemäß Anspruch 11, das gemäß dem Herstellungsverfahren nach Anspruch 13 erhalten wird und eine Keramikhülle (6), wie Aluminiumoxid, aufweist, um bei der Benutzung eine Temperatur von 1500° C erreichen zu können.

16. Hochspannungsgeschütztes Heizelement, hauptsächlich aus einer Hülle (6), wie zum Beispiel eine Metallröhre, im Innern welcher sich mindestens ein in einem Isolator eingebetteter Widerstand (7) befindet, bestehend, in Form mehrerer Stäbe (1) gemäß Anspruch 11, das gemäß dem Herstellungsverfahren nach Anspruch 12, wobei die in einem der beiden Endstäbe (1) eingebetteten Stromzuleitungen (9) abgerundet und einwandfrei poliert sind, um Sprunghaftigkeiten in den elektrischen Feldern, die elektrische Zündungen hervorrufen, zu vermeiden, wobei die Stromzuleitungen (9) außerdem in eine Dialyl-Therephtalat-Folie (11) eingewickelt sind, welche selbst wieder mit einer isolierenden, sich bei Wärme zusammenziehbaren Hülle (11) aus modifizierenden Polyolefin bedeckt ist, wodurch dieses geschützte Heizelement (5) so mit Spannungen über 1000 V gespeist werden kann, und trotzdem Warmspannungsdurchschläge von mehr als 3000 V aufweist.

17. Geschütztes Heizelement mit variablen Diffusionskoeffizienten, hauptsächlich aus einer Hülle (6), wie zum Beispiel eine Metallröhre, im Innern welcher sich mindestens ein in einem Isolator eingebetteter Widerstand (7) befindet, bestehend, in Form mehrerer Stäbe (1) gemäß Anspruch 11, das gemaß dem Herstellungsverfahren nach Anspruch 12 erhalten wird, wobei die Zusammensetzung der Stäbe (1), außer dem Bornitrid, noch ein zweites Material mit verschiedener spezifischer Wärme und Temperaturleitfähigkeit aufweist, wobei dieses zweite Material im Zentrum der Stäbe (1), oder mit dem Bornitrid selbst vermischt ist.

18. Geschütztes Heizelement nach Anspruch 17, dadurch gekennzeichnet, daß die Stäbe (1) in ihrem Zentrum einen Kern aus Magnesium oder aus Aluminiumoxid aufweisen.

19. Geschütztes Heizelement nach Anspruch 17, dadurch gekennzeichnet, daß die Stäbe (1) aus einer Mischung von Bornitrid und Magnesium zusammengesetzt sind.

20. Geschütztes Heizelement nach irgendeinem der Ansprüche 17 bis 19, dadurch gekennzeichnet, daß die in einem der beiden Endstäbe (1) eingebetteten Stromzuleitungen (9) abgerundet und einwandfrei poliert sind, um Sprunghaftigkeiten in den elektrischen Feldern, die elektrische Zündungen hervorrufen, zu vermeiden, wobei die Stromzuleitungen (9) außerdem in eine Dialyl-Therephtalat-Folie (10) eingewickelt sind, welche selbst wieder mit einer isolierenden, sich bei Wärme zusammenziehbaren Hülle (11) aus modifiziertem Polyolefin bedeckt ist, wodurch dieses geschützte Heizelement (5) so mit Spannungen über 1000 V gespeist werden kann, und trotzdem Warmspannungsdurchschläge von mehr als 3000 V aufweist.

Fig.1

Fig. 2

Fig. 3

Fig. 4

Fig. 5

EP 0 356 361 B1